# FASCICULE DE BREVET EUROPEEN

(11) **EP 3 237 660 B1**
(45) Date de publication et mention de la délivrance du brevet: **05.12.2018**
(21) Numéro de dépôt: 15823672.9
(22) Date de dépôt: 18.12.2015
(51) Int. Cl.: C04B 35/80, C04B 35/117, D03D 15/00, C04B 35/111, C04B 35/14, C04B 35/18, C04B 35/185, C04B 35/447, C04B 35/48, C04B 35/56, C04B 35/565, C04B 35/58, C04B 35/634, B28B 1/24, B28B 1/26, B28B 7/36, B28B 23/02, C04B 35/626, B29C 70/48, D03D 25/00, F01D 5/28

(54) **PROCÉDÉ DE FABRICATION D'UNE PRÉFORME FIBREUSE CHARGÉE DE PARTICULES CÉRAMIQUES RÉFRACTAIRES**
VERFAHREN ZUR HERSTELLUNG EINES MIT KERAMISCHEN, FEUERFESTEN PARTIKELN GEFÜLLTEN FASERVORFORMLINGS
PROCESS FOR THE MANUFACTURING OF A FIBROUS PREFORM LOADED WITH CERAMIC REFRACTORY PARTICLES

(30) Priorité: 23.12.2014 FR 1463286
(43) Date de publication de la demande: 01.11.2017
(73) Titulaire: SAFRAN AIRCRAFT ENGINES, 75015 Paris (FR); SAFRAN, 75015 Paris (FR)
(72) Inventeur: BILLOTTE CABRE, Catherine, La Prairie J5R 5H8 (CA); DROZ, Nicolas, 77550 Moissy-cramayel Cedex (FR); LIAIS, Ludovic, 77550 Moissy-cramayel Cedex (FR); PODGORSKI, Michael, 75012 Paris (FR); RUIZ, Edu, Mont-Royal, QC H3R 1A7 (CA); TURENNE, Sylvain, Saint-Bruno J3V 4W3 (CA)
(74) Mandataire: Laïk, Eric
(86) Numéro de dépôt international: PCT/FR2015/053621
(87) Numéro de publication internationale: WO 2016/102839

(56) Documents cités:
- EP-A1- 2 181 974
- FR-A1- 2 326 275
- FR-A1- 2 702 475
- FR-A1- 2 958 933
- US-A- 5 436 042
- US-A1- 2012 217 670
- HATICE SINEM SAS ET AL: "Modeling of particle-resin suspension impregnation in compression resin transfer molding of particle-filled, continuous fiber reinforced composites", HEAT AND MASS TRANSFER, vol. 50, no. 3, 13 décembre 2013 (2013-12-13), pages 397-414, XP055191097, ISSN: 0947-7411, DOI: 10.1007/s00231-013-1275-z
- CHIH-YUAN CHANG: "Modeling and evaluation of the filling process of vacuum-assisted compression resin transfer molding", JOURNAL OF POLYMER ENGINEERING, WALTER DE GRUYTER GMBH, DE, vol. 33, no. 3, 1 mai 2013 (2013-05-01), pages 211-219, XP008176406, ISSN: 0334-6447, DOI: 10.1515/POLYENG-2012-0160

## Description

### Arrière-plan de l'invention

L'invention concerne des procédés de fabrication de pièces en matériau composite comprenant une préforme fibreuse ainsi qu'une matrice céramique réfractaire.

La présente invention concerne un procédé de fabrication d'une pièce en matériau composite thermostructural à matrice céramique (CMC), c'est-à-dire comportant un renfort fibreux formé à partir de fibres en matériau céramique réfractaire dont la porosité est comblée par une matrice également en matériau céramique réfractaire, l'invention concerne notamment un procédé de fabrication d'une pièce de type Oxyde/Oxyde.

Les pièces en matériau composite Oxyde/Oxyde sont généralement élaborées par drapage dans un moule d'une pluralité de strates fibreuses réalisées à partir de fibres en oxyde réfractaire, les strates étant chacune préalablement imprégnées avec une barbotine chargée de particules d'oxyde réfractaire. L'ensemble des strates ainsi disposées est ensuite compacté à l'aide d'un contre-moule ou d'une bâche à vide. Dans le cas où une bâche à vide est mise en oeuvre, les strates pré-imprégnées peuvent par exemple être passées à l'autoclave (procédé de type pré-imprégné « CMO »). La préforme chargée ainsi obtenue est alors soumise à un frittage afin de former une matrice en oxyde réfractaire dans la préforme et obtenir une pièce en matériau composite Oxyde/Oxyde. Cette technique peut être également utilisée pour réaliser d'autres pièces en matériau composite à matrice céramique (CMC). Dans ce cas, les strates fibreuses peuvent être réalisées à partir de fibres de carbure de silicium (SiC) ou de carbone (C) et peuvent être imprégnées avec une barbotine chargée de particules de carbure (par exemple de SiC), de borure (par exemple de TiB₂), de nitrure (par exemple de Si₃N₄) ou d'oxyde par exemple d'alumine ou de zircone.

Cependant, ce type de procédé d'élaboration ne peut permettre de réaliser que des pièces en matériau composite à matrice céramique ayant une faible épaisseur et un renfort fibreux bidimensionnel (2D). Les caractéristiques mécaniques de ces matériaux composites sont très différentes selon les directions inhérentes à la structure du renfort. Plus précisément, ces matériaux présentent une faible tenue mécanique au délaminage et aux efforts hors plan.

La réalisation de textures fibreuses obtenues par tissage tridimensionnel entre des fils continus de chaîne et de trame permet d'augmenter la résistance mécanique du matériau et en particulier sa résistance au délaminage. Dans ce cas et également pour des textures fibreuses 2D de forte épaisseur, seuls les procédés utilisant un gradient de pression, comme les procédés de type infusion, moulage par injection dits « RTM » ou aspiration de poudre submicronique dits « APS », permettent de faire pénétrer une suspension chargée dans la texture fibreuse dont l'épaisseur peut atteindre plusieurs dizaines de millimètres selon les applications visées.

Cependant dans le cadre de la réalisation d'une pièce en matériau à matrice céramique, ces procédés présentent certains inconvénients.

En effet, l'imprégnation d'une texture fibreuse de géométrie complexe et de forte épaisseur peut ne pas être réalisée par un procédé de type infusion car ce type de procédé peut ne pas permettre d'atteindre un gradient de pression suffisant pour obtenir une bonne imprégnation de l'ensemble de la texture. Le procédé de type APS ne permet, quant à lui, pas de contrôler finement le taux de matrice introduit dans la préforme ni les états de surface.

Si le procédé RTM peut être utilisé pour imprégner une texture fibreuse avec une barbotine chargée, il nécessite néanmoins la mise en oeuvre d'une étape d'élimination (évacuation et/ou évaporation) du milieu liquide de la barbotine afin de ne laisser subsister que les charges solides dans la préforme avant le frittage. Cette étape supplémentaire entraîne un allongement du temps de mise en oeuvre du procédé.

Par ailleurs, cette étape d'élimination du milieu liquide peut conduire à une perte de particules et/ou à une modification de la répartition de ces dernières dans la préforme et donc à l'apparition de macro porosités dans le matériau final en raison du manque de matrice à certains endroits.

Il faut aussi prendre en compte le fait que, dans les procédés RTM mettant en oeuvre une étape d'injection de la barbotine, il peut être nécessaire de limiter le taux volumique de particules céramiques réfractaires présentes dans la barbotine afin de conserver une viscosité suffisamment faible pour permettre une injection homogène de la barbotine. Cette contrainte peut conduire à devoir répéter l'étape d'injection de la barbotine et, par conséquent, l'étape d'élimination du milieu liquide afin d'obtenir à terme le taux volumique souhaité de matrice. La limitation de la teneur volumique en particules céramiques réfractaires dans la barbotine peut donc entraîner une complexification de la gamme de fabrication.

EP 2 181 974 A1 décrit la production de composants en matériau composite à matrice céramique utilisables pour des aubes de turbomachines et divulgue un procédé comprenant les étapes de : façonnement d'une ébauche fibreuse ; placement dans un module de drainage ; injection d'une solution comprenant des particules de céramiques ; drainage du liquide de ladite solution par capillarité dans ledit moule ; démoulage ; et frittage. Ce document ne mentionne pas de drainage actif.

FR 2 702 475 A1 décrit la fabrication de céramiques renforcées par des fibres disposées dans les trois dimensions par : placement d'une ébauche fibreuse tridimensionnelle (p.ex. carbonée) dans une cavité de moulage ; injection d'une barbotine comprenant des particules de SiC ou Si₃N₄ et un agent organique ; drainage du milieu liquide de la barbotine par une pièce rigide en matériau poreux placée entre l'ébauche fibreuse et un port d'aspiration ; et frittage. Mais la barbotine a une haute teneur en particules céramiques.

US 5 436 042 A1 décrit la production de composants en matériau composite à matrice céramique utilisables pour des turbines et divulgue une méthode comprenant le placement d'une ébauche fibreuse (en SiC) dans un moule poreux, l'injection d'une barbotine aqueuse comprenant des particules de SiC et un liant acrylique, le drainage des liquides, séchage, démoulage et frittage. Ce document ne mentionne pas de drainage actif.

Il existe par conséquent un besoin pour simplifier les procédés de fabrication de préformes chargées de particules réfractaires destinées à former des pièces en matériau composite présentant un taux volumique de matrice souhaité.

Il existe encore un besoin pour disposer de procédés rapides et fiables de fabrication de pièces en matériau composite présentant les propriétés souhaitées à partir d'une texture fibreuse épaisse et/ou de géométrie complexe.

### Objet et résumé de l'invention

A cet effet, l'invention propose, selon un premier aspect, un procédé de fabrication d'une préforme fibreuse chargée de particules céramiques réfractaires comportant les étapes suivantes :
a) placement d'une texture fibreuse comportant des fibres céramiques réfractaires dans une cavité de moulage délimitée par un moule et un contre-moule,
b) injection d'une barbotine, comportant une poudre de particules céramiques réfractaires présente dans un milieu liquide, dans la porosité de la texture fibreuse présente dans la cavité de moulage, l'injection étant réalisée au moins au travers d'une première face ou d'un premier bord de ladite texture fibreuse, la barbotine étant injectée dans la cavité de moulage, durant l'étape b), au travers d'un ou plusieurs ports d'injection, et la barbotine présentant, avant l'étape b), une teneur volumique en particules céramiques réfractaires inférieure ou égale à 40%, et
c) drainage par une pièce en matériau poreux du milieu liquide de la barbotine ayant pénétré dans la texture fibreuse, la pièce en matériau poreux ayant une épaisseur supérieure ou égale à 0,1 mm, le drainage étant effectué au moins au travers d'une deuxième face ou d'un deuxième bord de la texture fibreuse différent de la première face ou du premier bord, ladite pièce en matériau poreux permettant en outre de retenir la poudre de particules réfractaires dans la porosité de la texture fibreuse afin d'obtenir une préforme fibreuse chargée de particules réfractaires.

Un bord désigne un côté de la texture fibreuse s'étendant le long de l'épaisseur de celle-ci (i.e. le long de la direction de plus petite dimension de la texture fibreuse), les côtés de la texture fibreuse qui ne sont pas des bords sont appelés « faces ». Par exemple, dans le cas où la texture fibreuse est sous forme de plaque, celle-ci présente deux faces opposées (« recto » et « verso ») et un ou plusieurs bords. Dans le cas où la texture fibreuse est destinée à constituer le renfort fibreux d'une aube, les bords de la texture fibreuse vont être destinés à constituer le bord d'attaque et le bord de fuite de l'aube et les faces de la texture fibreuse vont être destinées à constituer l'intrados ou l'extrados de l'aube.

L'épaisseur de la pièce en matériau poreux correspond à sa plus petite dimension.

En utilisant une pièce en matériau poreux permettant de drainer sélectivement le milieu liquide de la barbotine, le procédé selon l'invention permet d'éliminer le milieu liquide de la barbotine introduite dans la texture fibreuse tout en retenant dans la texture fibreuse les particules solides céramiques réfractaires. Du fait de l'utilisation de la pièce en matériau poreux permettant l'élimination sélective du milieu liquide, l'invention permet avantageusement d'obtenir une accumulation de particules réfractaires dans la texture fibreuse. L'invention permet donc d'utiliser avec succès des procédés dans lesquels la barbotine est injectée dans la porosité d'une texture fibreuse et qui nécessitent d'utiliser des barbotines relativement peu chargées tout en permettant l'obtention d'un taux de charge en particules céramiques réfractaires élevé dans la texture et, par conséquent, d'un taux volumique de matrice élevé après frittage de ces particules. Le procédé selon l'invention permet ainsi d'obtenir de manière simple des pièces en matériau composite thermostructural présentant des propriétés mécaniques améliorées.

Durant l'étape b), la barbotine est injectée dans la cavité de moulage au travers d'un ou plusieurs ports d'injection. Durant l'étape c), le drainage du milieu liquide est effectué au travers d'au moins un évent de sortie. Le drainage de l'étape c) est réalisé par application d'une différence de pression entre le port d'injection et l'évent de sortie. Cette différence de pression peut être appliquée par différents moyens, et par exemple par injection sous pression de la barbotine durant l'étape b) et/ou par pompage au niveau de l'évent de sortie et/ou par application d'une pression de compactage sur la texture fibreuse par le moule et le contre-moule.

Dans un exemple de réalisation, une pression inférieure ou égale à 950 mbar, par exemple comprise entre 50 mbar et 950 mbar, peut être imposée au niveau de l'évent de sortie durant l'étape c).

Dans un exemple de réalisation, la barbotine peut être injectée sous pression lors de l'étape b), par exemple avec une pression d'injection supérieure ou égale à 1,1 bar, par exemple comprise entre 1,1 bar et 6 bars.

On peut avantageusement réaliser une seule phase d'injection de la barbotine. En variante, on peut réaliser une première phase d'injection de la barbotine, interrompre l'injection de la barbotine puis réaliser une deuxième phase d'injection de la barbotine.

Dans un exemple de réalisation, le moule peut constituer un support rigide sur lequel la texture fibreuse est présente et le contre-moule peut être rigide.

Autrement dit, dans ce cas, le moule et le contre-moule ne se déforment pas durant la mise en oeuvre du procédé selon l'invention. Un tel mode de réalisation permet avantageusement de fabriquer une pièce en matériau composite de forme précise imposée par la forme du moule et du contre-moule. Un tel contrôle de la forme de la pièce à fabriquer est avantageux notamment lorsque celle-ci est destinée à être utilisée dans le domaine aéronautique.

Dans un exemple de réalisation, le moule peut constituer un support rigide sur lequel la texture fibreuse est présente et le contre-moule peut être déformable.

Dans un exemple de réalisation, la pièce en matériau poreux peut être présente entre le moule et la texture fibreuse ou entre le contre-moule et la texture fibreuse.

Dans un exemple de réalisation, la pièce en matériau poreux peut constituer tout ou partie du moule ou du contre-moule.

Dans un exemple de réalisation, le contre-moule peut exercer une pression sur la texture fibreuse pendant et/ou après l'étape b).

L'application d'une telle pression sur la texture fibreuse permet avantageusement d'accélérer l'imprégnation de la texture fibreuse par la barbotine et d'accélérer le drainage du milieu liquide.

Dans un exemple de réalisation, la texture fibreuse peut être compactée entre le moule et le contre-moule pendant et/ou après l'étape b). En d'autres termes, dans ce cas, la texture fibreuse est sous une forme compactée entre le moule et le contre-moule pendant et/ou après l'étape b) du fait de l'application d'une pression de compaction par le contre-moule.

Outre l'avantage décrit plus haut relatif à l'application d'une pression sur la texture fibreuse, le fait de compacter la texture fibreuse permet avantageusement d'atteindre une épaisseur cible pour celle-ci et par conséquent d'atteindre une épaisseur cible pour la pièce en matériau composite à obtenir.

Dans un exemple de réalisation, la pression de compaction peut être appliquée avant l'étape b) et être ensuite maintenue durant l'étape b). En variante, l'étape b) peut d'abord être initiée puis la pression de compaction peut être appliquée après le début de l'étape b) et être ensuite maintenue.

La pression exercée par le contre-moule sur la texture fibreuse peut être obtenue par application d'un fluide (gaz ou liquide) sur le contre-moule, le fluide étant introduit dans une chambre, le contre-moule étant situé entre la chambre et la cavité de moulage.

Durant l'étape c), un pompage au niveau de l'évent de sortie peut être effectué afin d'aspirer tout ou partie du milieu liquide présent dans la porosité de la texture fibreuse. En alternative ou en combinaison, on peut durant l'étape c) chauffer le milieu liquide présent dans la porosité de la texture fibreuse afin de l'évaporer au travers de la deuxième face ou du deuxième bord de la texture fibreuse et au travers de la pièce en matériau poreux.

Dans un exemple de réalisation, l'injection de la barbotine peut être réalisée lors de l'étape b) au travers d'une pluralité de zones différentes de la surface externe de la texture fibreuse.

Dans un exemple de réalisation, la barbotine peut durant l'étape b) être injectée au travers d'une pluralité de ports d'injections débouchant dans des zones différentes de la cavité de moulage.

En variante ou en combinaison, un élément de répartition du flux de barbotine peut être présent dans la cavité de moulage, ledit élément de répartition définissant une pluralité de pores dans lesquels la barbotine s'écoule durant l'étape b) pour rejoindre la première face ou le premier bord de la texture fibreuse.

Un tel mode de réalisation permet de réaliser une injection multi-points dans la texture fibreuse et par conséquent d'obtenir de manière homogène et plus rapide une distribution homogène des particules céramiques réfractaires dans la texture fibreuse.

Dans un exemple de réalisation, l'injection de la barbotine peut être effectuée d'un premier côté de la texture fibreuse et le drainage du milieu liquide peut être effectué d'un deuxième côté de la texture fibreuse opposé au premier côté.

Dans un exemple de réalisation, la barbotine peut être injectée lors de l'étape b) au moins au travers d'un bord de la texture fibreuse et le drainage peut être effectué lors de l'étape c) au moins au travers d'une face de la texture fibreuse.

Dans un exemple de réalisation, la barbotine peut être injectée lors de l'étape b) au moins au travers d'une première face de la texture fibreuse et le drainage peut être effectué lors de l'étape c) au moins au travers d'une deuxième face de la texture fibreuse différente de la première face.

La barbotine présente, avant l'étape b), une teneur volumique en particules céramiques réfractaires inférieure ou égale à 40%.

La mise en oeuvre d'une barbotine présentant un tel taux volumique de particules céramiques réfractaires permet avantageusement d'améliorer la capacité d'injection de la barbotine en limitant sa viscosité.

Ainsi, la viscosité de la barbotine avant l'étape b) peut avantageusement être inférieure ou égale à 150 mPa.s⁻¹, voire à 60 mPa.s⁻¹. La viscosité de la barbotine est mesurée à l'aide d'un viscosimètre de type Brookfield à la température de 20°C.

Dans un exemple de réalisation, la barbotine peut comporter un liant organique.

La mise en oeuvre d'un liant organique dans la barbotine est avantageuse car cela permet d'améliorer la tenue du cru (préforme injectée séchée avant frittage des particules céramiques réfractaires), ce qui est avantageux notamment lorsque la texture fibreuse a une géométrie complexe. La mise en oeuvre d'un liant organique est aussi avantageuse afin de maintenir le taux volumique de fibres en améliorant le contrôle de l'épaisseur après l'injection de la barbotine.

Par ailleurs, la barbotine mise en oeuvre peut être dépourvue d'un polymère pré-céramique comme les précurseurs de matériau céramique à base de polysilane. En variante, la barbotine peut comporter un polymère pré-céramique. Dans un exemple de réalisation, les particules réfractaires peuvent constituer la seule phase solide présente dans la barbotine utilisée.

Dans un exemple de réalisation, la texture fibreuse peut comporter une pluralité de fibres en oxyde réfractaire et les particules réfractaires peuvent être en oxyde réfractaire.

La présente invention vise également un procédé de fabrication d'une pièce en matériau composite comportant l'étape suivante :
d) fritter les particules céramiques réfractaires présentes dans la préforme fibreuse obtenue après mise en oeuvre d'un procédé tel que décrit plus haut afin de former une matrice réfractaire dans la porosité de ladite préforme.

La pièce obtenue après frittage peut, par exemple, constituer une aube de turbomachine.

On peut avant l'étape de frittage démouler la préforme chargée obtenue à l'issue de l'étape c) et la placer dans un four dans lequel le frittage va être réalisé.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures 1 et 2 représentent, de manière schématique et partielle, la configuration obtenue suite à la mise en oeuvre de différentes étapes d'un premier exemple de procédé selon l'invention,
- la figure 3 représente, de manière schématique et partielle, la configuration obtenue pendant l'injection et le drainage dans une variante de procédé selon l'invention dans laquelle un procédé de type « poly-flex » est mis en oeuvre,
- la figure 4 représente, de manière schématique et partielle, la configuration obtenue pendant l'injection et le drainage dans une variante de procédé selon l'invention, et
- la figure 5 représente, de manière schématique et partielle, la configuration obtenue pendant l'injection et le drainage dans une variante de procédé selon l'invention.

### Description détaillée de modes de réalisation

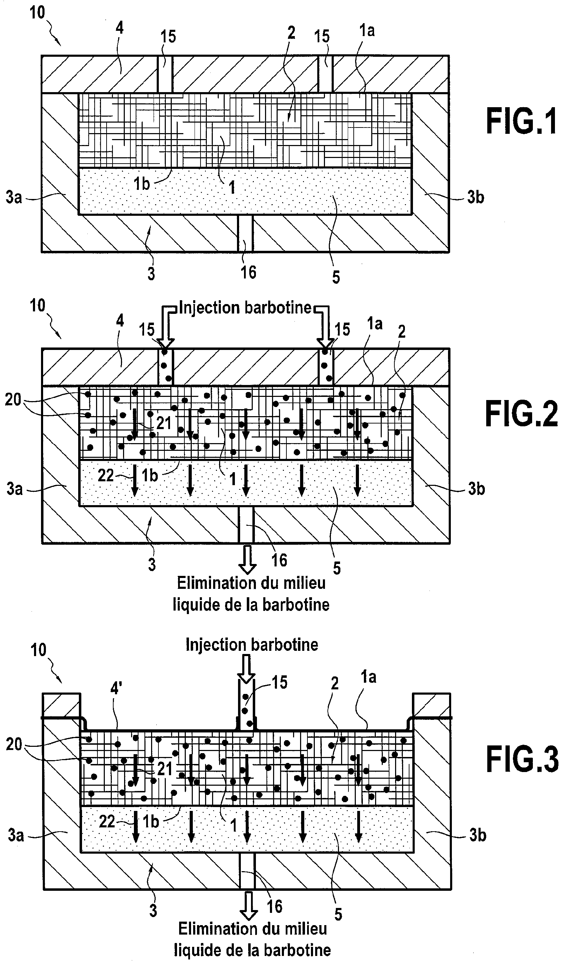

On a représenté à la figure 1 la configuration obtenue après mise en oeuvre de l'étape a) dans un premier exemple de procédé selon l'invention. Comme illustré à la figure 1, une texture fibreuse 1 comportant des fibres céramiques réfractaires est présente dans une cavité de moulage 2. La texture fibreuse 1 peut être réalisée de façon connue par tissage au moyen d'un métier à tisser de type Jacquard ou à navette sur lequel on a disposé un faisceau de fils de chaînes ou de torons en une pluralité de couches, les fils de chaînes étant liés par des fils de trame ou inversement. La texture fibreuse peut être réalisée par empilement de strates ou plis obtenus par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement.

Le procédé selon l'invention peut être particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence d'au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D présentent une géométrie complexe dans laquelle il peut être difficile d'introduire et de répartir de manière homogène des particules solides en suspension. Le procédé de l'invention est également très bien adapté pour l'introduction d'une barbotine chargée dans des textures fibreuses tissées 3D.

La texture fibreuse destinée à former le renfort fibreux de la pièce en matériau composite peut comporter des fibres choisies parmi : les fibres d'alumine, les fibres de mullite, les fibres de silice, les fibres d'aluminosilicate, les fibres de borosilicate, les fibres de carbure de silicium, les fibres de carbone et les mélanges de telles fibres.

La texture fibreuse mise en oeuvre peut par exemple être réalisée par tissage 2D ou par tissage 3D (empilement strates 2D ou tissage 3D). La texture fibreuse peut encore être réalisée par empilement de plusieurs structures fibreuses obtenues par tissage 3D. La texture fibreuse mise en oeuvre peut, par exemple, comporter une pluralité de fils d'alumine Nextel 610™.

La cavité de moulage 2 est délimitée par un moule 3 et un contre-moule 4. Dans l'exemple illustré, le moule 3 et le contre-moule 4 sont rigides. Le moule 3 constitue un support rigide sur lequel la texture fibreuse 1 est présente durant les étapes d'injection et de drainage b) et c). Le moule 3 comporte des parois latérales 3a et 3b délimitant la cavité de moulage 2. Dans l'exemple illustré, le dispositif 10 dans lequel la texture fibreuse 1 est présente est fermé dans sa partie inférieure par le moule 3 et est fermé dans sa partie supérieure par le contre-moule 4 formant un couvercle refermant le dispositif 10. Le moule 3 et le contre-moule 4 servent à dimensionner la préforme et donc la pièce à obtenir ainsi qu'à ajuster le taux volumique de fibres dans la pièce à obtenir.

Le contre-moule 4 comporte une pluralité de ports d'injection 15 de la barbotine au travers desquels la barbotine est destinée à être injectée afin de pénétrer dans la porosité de la texture fibreuse 1 au travers de la première face la de la texture fibreuse 1. Dans l'exemple illustré à la figure 1, la barbotine est destinée à être injectée au travers d'une pluralité de ports d'injection 15 débouchant dans des zones différentes de la cavité de moulage. Toutefois, on ne sort pas du cadre de l'invention lorsque la barbotine est injectée au travers d'un unique pore d'injection.

Le moule 3 comporte, quant à lui, un unique évent de sortie 16 du milieu liquide de la barbotine. Bien entendu, on ne sort pas du cadre de l'invention lorsqu'une pluralité d'évents de sortie sont mis en oeuvre.

Dans l'exemple illustré, la pièce en matériau poreux 5 est présente dans la cavité de moulage 2 entre le moule 3 et la texture fibreuse 1. La pièce en matériau poreux 5 est présente entre l'évent de sortie 16 et la texture fibreuse 1. Dans l'exemple illustré, la pièce en matériau poreux 5 est présente au contact du moule 3 et au contact de la deuxième face 1b de la texture fibreuse 1 au travers de laquelle le drainage du milieu liquide de la barbotine est destiné à être réalisé. La deuxième face 1b de la texture fibreuse 1 est, dans l'exemple illustré à la figure 1, située du côté opposé à la première face la au travers de laquelle la barbotine est destinée à pénétrer dans la texture 1.

La pièce en matériau poreux 5 peut par exemple être réalisée en polytétrafluoroéthylène (PTFE) microporeux comme les produits « microporous PTFE » vendus par la société Porex®. On peut par exemple utiliser pour réaliser la pièce en matériau poreux 5, le matériau PM 0130 commercialisé par la société Porex® présentant une taille de pores comprise entre 1 µm et 2 µm.

Dans l'exemple illustré, la pièce en matériau poreux 5 s'étend le long de l'intégralité la deuxième face 1b et recouvre entièrement l'évent de sortie 16. On ne sort pas du cadre de la présente invention lorsque la pièce en matériau poreux 5 s'étend le long d'une partie seulement de la deuxième face 1b et recouvre entièrement l'évent de sortie 16. Dans une variante non illustrée, la pièce en matériau poreux peut s'étendre le long de l'intégralité de la deuxième face et se prolonger au-delà de celle-ci.

La pièce en matériau poreux 5 permet le drainage du milieu liquide de la barbotine à l'extérieur de la texture fibreuse 1 et son évacuation par l'évent de sortie 16 du fait de l'application d'un gradient de pression entre l'évent de sortie 16 et les ports d'injection 15.

La pièce en matériau poreux 5 présente une épaisseur supérieure ou égale à 0,1 mm. A titre d'exemple, la pièce en matériau poreux 5 peut présenter une épaisseur supérieure ou égale à 1 mm, voire de plusieurs millimètres. Le taux moyen de porosité de la pièce en matériau poreux 5 peut être d'environ 30%. La taille moyenne des pores (D50) de la pièce en matériau poreux 5 peut par exemple être comprise entre 1 µm et 2 µm.

Dans un exemple de réalisation, la pièce en matériau poreux 5 peut être rigide et présenter une forme correspondant à la forme de la préforme et de la pièce en matériau composite à obtenir. Dans ce cas, la pièce en matériau poreux peut par exemple être réalisée par thermoformage. En variante, la pièce en matériau poreux peut être déformable et peut prendre la forme du moule laquelle correspond à la forme de la préforme et de la pièce en matériau composite à obtenir.

Avant mise en oeuvre de l'étape b), une pression de compaction permettant de compacter la texture fibreuse 1 entre le moule 3 et le contre-moule 4 peut être appliquée, cette pression de compaction pouvant être maintenue durant l'étape b). En variante, la pression de compaction peut être appliquée après le début de l'injection de la barbotine (i.e. après le début de l'étape b)) et peut ensuite être maintenue. En particulier, la pression de compaction peut être appliquée une fois l'injection de la barbotine terminée et peut ensuite être maintenue. Par exemple, la texture fibreuse peut pendant et/ou après l'étape b) être soumise à une pression de compaction inférieure ou égale à 15 bars, par exemple à 7 bars. La texture fibreuse peut pendant et/ou après l'étape b) être soumise à une pression de compaction supérieure ou égale à 0,3 bar. L'application d'une pression de compaction peut permettre de compacter la texture afin d'aider au drainage du milieu liquide et d'atteindre une épaisseur cible pour la préforme fibreuse sans endommager celle-ci.

Comme mentionné plus haut, la pression de compaction peut être appliquée par un fluide appliqué sur le contre-moule 4 du côté opposé à la cavité de moulage 2.

On a illustré à la figure 2 la configuration obtenue durant l'injection de la barbotine et le drainage du milieu liquide. La barbotine a été injectée par les ports d'injection 15 de manière à pénétrer dans la texture fibreuse 1 au travers de la première face la de la texture fibreuse 1. Les particules réfractaires 20 présentes dans la barbotine sont destinées à permettre la formation d'une matrice céramique réfractaire dans la porosité de la texture fibreuse 1. Cette matrice céramique réfractaire peut, dans un exemple de réalisation, être une matrice d'oxyde réfractaire.

La barbotine peut par exemple être une suspension d'une poudre d'alumine dans de l'eau. La dimension particulaire moyenne (D50) de la poudre d'alumine peut être comprise entre 0,1 µm et 0,3 µm. La poudre d'alumine utilisée peut être une poudre d'alumine alpha commercialisée par la société Baikowski sous la dénomination SM8.

Plus généralement, la barbotine peut être une suspension comportant des particules céramiques réfractaires présentant une dimension particulaire moyenne comprise entre 0,1 µm et 10 µm. La teneur volumique en particules céramiques réfractaires dans la barbotine peut, avant l'étape b), être comprise entre 25% et 40%. Les particules céramiques réfractaires peuvent comporter un matériau choisi parmi : l'alumine, la mullite, la silice, les aluminosilicates, les aluminophosphates, les carbures, les borures, les nitrures et les mélanges de tels matériaux. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu liquide de la barbotine peut, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1,5 et 4. La barbotine peut, en outre, comporter un liant organique comme de l'alcool polyvinylique (PVA) lequel est notamment soluble dans l'eau.

Comme illustré à la figure 2, les particules céramiques réfractaires 20 sont présentes après injection de la barbotine dans la porosité de la texture fibreuse 1. Les flèches 21 représentent le mouvement de la barbotine injectée dans la texture fibreuse 1. Les flèches 22 représentent quant à elles le mouvement du milieu liquide de la barbotine drainé par la pièce en matériau poreux 5.

Le contre-moule 4 exerce une pression sur la texture fibreuse 1 pendant et/ou après l'étape b) afin d'accélérer le drainage du milieu liquide.

Un pompage peut, en outre, être réalisé au niveau de l'évent de sortie 16 durant l'étape c), par exemple au moyen d'une pompe à vide primaire. La réalisation d'un tel pompage permet d'améliorer le drainage et de sécher plus rapidement la texture fibreuse.

En alternative ou en combinaison, on peut durant l'étape c) chauffer le milieu liquide encore présent dans la porosité de la texture fibreuse afin d'évaporer ce dernier au travers de la deuxième face de la texture fibreuse et de la pièce en matériau poreux. Par exemple, la température du milieu liquide peut être élevée à une température comprise entre 80°C et 105°C.

Dans cette configuration, la pièce en matériau poreux 5 permet de retenir dans la texture fibreuse 1 les particules céramiques réfractaires 20 initialement présentes dans la barbotine et que tout ou partie de ces particules 20 se déposent par filtration dans la texture fibreuse 1.

Une fois les étapes d'injection et de drainage effectuées, on obtient une préforme fibreuse chargée de particules céramiques réfractaires, par exemple de particules d'oxyde céramique réfractaire, par exemple d'alumine.

La préforme obtenue est ensuite séchée puis démoulée, la préforme pouvant conserver après démoulage la forme adoptée dans la cavité de moulage, par exemple sa forme adoptée après compaction entre le moule et le contre-moule.

La préforme est ensuite soumise à un traitement thermique de frittage, par exemple sous air à une température comprise entre 1000°C et 1200°C afin de fritter les particules céramiques réfractaires et ainsi former une matrice céramique réfractaire dans la porosité de la préforme fibreuse. On obtient alors une pièce en matériau composite, par exemple une pièce en matériau composite Oxyde/Oxyde, munie d'un renfort fibreux formé par la préforme fibreuse et présentant un taux volumique de matrice élevé avec une répartition homogène de la matrice céramique réfractaire dans tout le renfort fibreux.

Une pièce en matériau composite CMC autre que Oxyde/Oxyde peut être obtenue de la même façon en réalisant la texture fibreuse avec des fibres de carbure de silicium et/ou de carbone et en utilisant une barbotine chargée de particules de carbure (par exemple de SiC), de borure (par exemple de TiB₂) ou de nitrure (par exemple de Si₃N₄).

On a représenté à la figure 3 une variante de réalisation dans laquelle le contre-moule 4' est déformable. Une pression est exercée sur le contre-moule déformable 4' afin d'assurer le maintien du contre-moule déformable 4' contre la première face la de la texture fibreuse 1. Comme décrit plus haut, le contre-moule 4' peut exercer une pression sur la texture fibreuse 1 durant le procédé. On voit aussi à la figure 3, comme décrit plus haut, la présence de particules réfractaires 20 dans la porosité de la texture fibreuse 1 ainsi que le drainage du milieu liquide de la barbotine injectée (flèches 22).

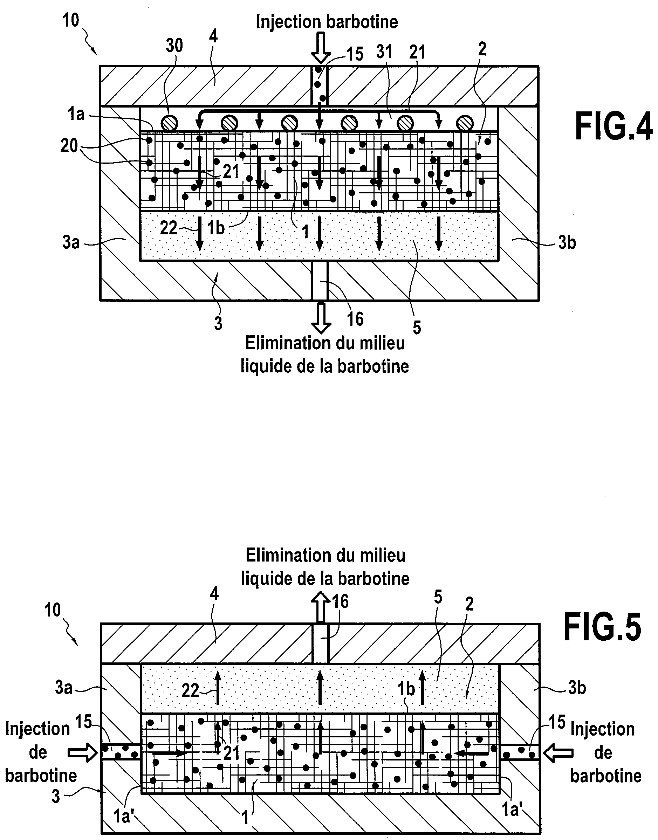

On a représenté à la figure 4 une variante de réalisation dans laquelle un élément de répartition du flux de barbotine 30 ici sous la forme d'une grille est présent entre la première face la de la texture fibreuse 1 et le port d'injection 15. Cet élément de répartition 30 est au contact de la première face la de la texture fibreuse 1. Cet élément de répartition 30 définit une pluralité de pores 31 dans lesquels la barbotine s'écoule durant l'injection pour rejoindre la première face la de la texture fibreuse 1. Les pores 31 peuvent ou non être régulièrement espacés le long de la première face la de la texture fibreuse 1. L'élément de répartition 30 peut comme illustré définir au moins deux, voire au moins trois, pores 31.

Un tel mode de réalisation permet avantageusement d'accélérer l'obtention d'une distribution uniforme des particules réfractaires dans la texture fibreuse 1.

Bien entendu, on peut coupler la mise en oeuvre d'un tel élément de répartition à la réalisation d'une injection de la barbotine au travers d'une pluralité de ports d'injection débouchant dans des zones différentes de la cavité de moulage.

Les autres détails relatifs au procédé mis en oeuvre décrits plus haut sont applicables à ce mode de réalisation. En particulier, dans une variante non illustrée, on utilise un contre-moule 4' déformable au lieu du contre-moule 4 rigide.

On a représenté à la figure 5 une variante de réalisation où le moule 3 formant support de la texture fibreuse 1 comporte des parois latérales 3a et 3b au travers desquelles l'injection de la barbotine est réalisée. L'injection est effectuée au travers de bords 1a' de la texture fibreuse 1. La barbotine est injectée sous pression dans la texture fibreuse 1. Dans l'exemple illustré à la figure 5, le milieu liquide est évacué au travers de la face 1b supérieure de la texture fibreuse.

Ainsi, dans le cas de la figure 5, l'injection et le drainage ne sont font pas sur deux côtés opposés de la texture fibreuse. La barbotine est en effet dans ce cas injectée au travers d'un bord 1a' de la texture fibreuse et le milieu liquide est évacué au travers de la face 1b supérieure de la texture fibreuse 1.

L'expression « comportant/comprenant un(e) » doit se comprendre comme « comportant/comprenant au moins un(e) ».

L'expression « compris(e) entre ... et ... » doit se comprendre comme incluant les bornes.

## Revendications

1. Procédé de fabrication d'une préforme fibreuse chargée de particules céramiques réfractaires (20) comportant les étapes suivantes :
a) placement d'une texture fibreuse (1) comportant des fibres céramiques réfractaires dans une cavité de moulage (2) délimitée par un moule (3) et un contre-moule (4 ; 4'),
b) injection d'une barbotine, comportant une poudre de particules céramiques réfractaires (20) présente dans un milieu liquide, dans la porosité de la texture fibreuse (1) présente dans la cavité de moulage (2), l'injection étant réalisée au moins au travers d'une première face (1a) ou d'un premier bord (1a') de ladite texture fibreuse (1), la barbotine étant injectée dans la cavité de moulage (2), durant l'étape b), au travers d'un ou plusieurs ports d'injection (15), et la barbotine présentant, avant l'étape b), une teneur volumique en particules céramiques réfractaires (20) inférieure ou égale à 40%, et
c) drainage par une pièce en matériau poreux (5) du milieu liquide de la barbotine ayant pénétré dans la texture fibreuse (1), la pièce en matériau poreux ayant une épaisseur supérieure ou égale à 0,1 mm, le drainage étant effectué au moins au travers d'une deuxième face (1b) ou d'un deuxième bord de la texture fibreuse (1) différent de la première face (1a) ou du premier bord (1a'), ladite pièce en matériau poreux (5) permettant en outre de retenir la poudre de particules réfractaires (20) dans la porosité de la texture fibreuse (1) afin d'obtenir une préforme fibreuse chargée de particules réfractaires (20), la pièce en matériau poreux (5) étant présente entre le moule (3) et la texture fibreuse (1) ou entre le contre-moule (4 ; 4') et la texture fibreuse (1) et la pièce en matériau poreux (5) étant présente entre au moins un évent de sortie (16) et la texture fibreuse (1), un pompage étant effectué au niveau de l'évent de sortie (16) afin de drainer le milieu liquide au travers dudit évent de sortie (16).

2. Procédé selon la revendication 1, **caractérisé en ce que** le moule (3) constitue un support rigide sur lequel la texture fibreuse (1) est présente et le contre-moule (4) est rigide.

3. Procédé selon la revendication 1, **caractérisé en ce que** le moule (3) constitue un support rigide sur lequel la texture fibreuse (1) est présente et le contre-moule (4') est déformable.

4. Procédé selon l'une quelconque des revendications 1 à 3, **caractérisé en ce que** le contre-moule (4) exerce une pression sur la texture fibreuse (1) pendant et/ou après l'étape b).

5. Procédé selon la revendication 4, **caractérisé en ce que** la texture fibreuse (1) est compactée entre le moule (3) et le contre-moule (4) pendant et/ou après l'étape b).

6. Procédé selon l'une quelconque des revendications 1 à 5, **caractérisé en ce que** l'injection de la barbotine est réalisée lors de l'étape b) au travers d'une pluralité de zones différentes de la surface externe de la texture fibreuse (1).

7. Procédé selon la revendication 6, **caractérisé en ce que** un élément de répartition du flux de barbotine (30) est présent dans la cavité de moulage (2), ledit élément de répartition (30) définissant une pluralité de pores (31) dans lesquels la barbotine s'écoule durant l'étape b) pour rejoindre la première face (1a) ou le premier bord (1a') de la texture fibreuse (1).

8. Procédé selon l'une quelconque des revendications 1 à 7, **caractérisé en ce que** l'injection de la barbotine est effectuée d'un premier côté de la texture fibreuse et le drainage du milieu liquide est effectué d'un deuxième côté de la texture fibreuse opposé au premier côté.

9. Procédé selon l'une quelconque des revendications 1 à 8, **caractérisé en ce que** la barbotine est injectée lors de l'étape b) au moins au travers d'un bord (1a') de la texture fibreuse et **en ce que** le drainage est effectué lors de l'étape c) au moins au travers d'une face (1b) de la texture fibreuse.

10. Procédé selon l'une quelconque des revendications 1 à 9, **caractérisé en ce que** la barbotine est injectée lors de l'étape b) au moins au travers d'une première face (1a) de la texture fibreuse et **en ce que** le drainage est effectué lors de l'étape c) au moins au travers d'une deuxième face (1b) de la texture fibreuse différente de la première face (1a).

11. Procédé selon l'une quelconque des revendications 1 à 10, **caractérisé en ce que** la texture fibreuse (1) comporte des fibres en oxyde réfractaire et **en ce que** les particules réfractaires sont en oxyde réfractaire.

12. Procédé selon l'une quelconque des revendications 1 à 11, **caractérisé en ce qu'**une pression inférieure ou égale à 950 mbar est imposée au niveau de l'évent de sortie (16) durant l'étape c).

13. Procédé selon l'une quelconque des revendications 1 à 12, **caractérisé en ce que** la barbotine est injectée sous pression lors de l'étape M, la barbotine étant par exemple injectée lors de l'étape b) avec une pression d'injection supérieure ou égale à 1,1 bar, par exemple comprise entre 1,1 bar et 6 bars.

14. Procédé selon l'une quelconque des revendications 1 à 13, **caractérisé en ce que** la texture fibreuse est réalisée directement en une seule pièce par tissage tridimensionnel.

15. Procédé de fabrication d'une pièce en matériau composite comportant l'étape suivante :
d) fritter les particules réfractaires (20) présentes dans la préforme fibreuse obtenue après mise en oeuvre d'un procédé selon l'une quelconque des revendications 1 à 14 afin de former une matrice réfractaire dans la porosité de ladite préforme.

## Patentansprüche

1. Verfahren zur Herstellung eines mit feuerfesten Keramikteilchen (20) beladenen Faservorformlings, das die folgenden Schritte umfasst:
a) Anordnen einer Faserstruktur (1), die feuerfeste Keramikfasern umfasst, in einem Formhohlraum (2), welcher durch eine Form (3) und eine Gegenform (4; 4') begrenzt ist,
b) Einspritzen eines Schlickers, der ein Pulver aus feuerfesten Keramikteilchen (20), welches in einem flüssigen Medium vorliegt, umfasst, in die Poren der in dem Formhohlraum (2) vorhandenen Faserstruktur (1), wobei das Einspritzen wenigstens durch eine erste Seite (1a) oder einen ersten Rand (1a') der Faserstruktur (1) vollzogen wird, wobei der Schlicker während des Schrittes b) durch eine oder mehrere Einspritzöffnungen (15) in den Formhohlraum (2) eingespritzt wird, und wobei der Schlicker vor dem Schritt b) einen Volumengehalt an feuerfesten Keramikteilchen (20) von weniger als oder gleich 40 % aufweist, und
c) Drainieren des flüssigen Mediums des Schlickers, der in die Faserstruktur (1) eingedrungen ist, über ein Teil aus porösem Material (5), wobei das Teil aus porösem Material eine Dicke von mehr als oder gleich 0,1 mm aufweist, wobei das Drainieren wenigstens durch eine zweite Seite (1b) oder einen zweiten Rand der Faserstruktur (1), die bzw. der von der ersten Seite (1a) oder dem ersten Rand (1a') verschieden ist, vollzogen wird, wobei das Teil aus porösem Material (5) ferner ermöglicht, das Pulver aus feuerfesten Teilchen (20) in den Poren der Faserstruktur (1) zurückzuhalten, um einen mit feuerfesten Teilchen (20) beladenen Faservorformling zu erhalten, wobei das Teil aus porösem Material (5) zwischen der Form (3) und der Faserstruktur (1) oder zwischen der Gegenform (4; 4') und der Faserstruktur (1) vorhanden ist, und wobei das Teil aus porösem Material (5) zwischen wenigstens einem Austrittskanal (16) und der Faserstruktur (1) vorhanden ist, wobei ein Pumpen im Bereich des Austrittskanals (16) vollzogen wird, um das flüssige Medium durch den Austrittskanal (16) abzuziehen.

2. Verfahren nach Anspruch 1, **dadurch gekennzeichnet, dass** die Form (3) einen starren Träger bildet, auf dem die Faserstruktur (1) vorhanden ist, und die Gegenform (4) starr ist.

3. Verfahren nach Anspruch 1, **dadurch gekennzeichnet, dass** die Form (3) einen starren Träger bildet, auf dem die Faserstruktur (1) vorhanden ist, und die Gegenform (4') verformbar ist.

4. Verfahren nach einem der Ansprüche 1 bis 3, **dadurch gekennzeichnet, dass** die Gegenform (4) während und/oder nach Schritt b) einen Druck auf die Faserstruktur (1) ausübt.

5. Verfahren nach Anspruch 4, **dadurch gekennzeichnet, dass** die Faserstruktur (1) während und/oder nach Schritt b) zwischen der Form (3) und der Gegenform (4) verdichtet wird.

6. Verfahren nach einem der Ansprüche 1 bis 5, **dadurch gekennzeichnet, dass** das Einspritzen des Schlickers während des Schrittes b) durch eine Vielzahl von unterschiedlichen Bereichen der Außenfläche der Faserstruktur (1) vollzogen wird.

7. Verfahren nach Anspruch 6, **dadurch gekennzeichnet, dass** in dem Formhohlraum (2) ein Element zur Verteilung des Schlickerflusses (30) vorhanden ist, wobei das Verteilelement (30) eine Vielzahl von Poren (31) definiert, in denen der Schlicker während des Schrittes b) fließt, um die erste Seite (1a) oder den ersten Rand (1a') der Faserstruktur (1) zu verbinden.

8. Verfahren nach einem der Ansprüche 1 bis 7, **dadurch gekennzeichnet, dass** das Einspritzen des Schlickers auf einer ersten Seite der Faserstruktur erfolgt und das Drainieren des flüssigen Mediums auf einer der ersten Seite gegenüberliegenden zweiten Seite der Faserstruktur erfolgt.

9. Verfahren nach einem der Ansprüche 1 bis 8, **dadurch gekennzeichnet, dass** der Schlicker während des Schrittes b) wenigstens durch einen Rand (1a') der Faserstruktur eingespritzt wird und dass das Drainieren während des Schrittes c) wenigstens durch eine Seite (1b) der Faserstruktur durchgeführt wird.

10. Verfahren nach einem der Ansprüche 1 bis 9, **dadurch gekennzeichnet, dass** der Schlicker während des Schrittes b) wenigstens durch eine erste Seite (1a) der Faserstruktur eingespritzt wird und dass das Drainieren während des Schrittes c) wenigstens durch eine von der ersten Seite (1a) verschiedene zweite Seite (1b) der Faserstruktur durchgeführt wird.

11. Verfahren nach einem der Ansprüche 1 bis 10, **dadurch gekennzeichnet, dass** die Faserstruktur (1) Fasern aus feuerfestem Oxid umfasst und dass die feuerfesten Teilchen aus feuerfestem Oxid bestehen.

12. Verfahren nach einem der Ansprüche 1 bis 11, **dadurch gekennzeichnet, dass** während des Schrittes c) der Bereich des Austrittskanals (16) mit einem Druck von weniger als oder gleich 950 mbar beaufschlagt wird.

13. Verfahren nach einem der Ansprüche 1 bis 12, **dadurch gekennzeichnet, dass** der Schlicker während des Schrittes b) unter Druck eingespritzt wird, wobei der Schlicker beispielsweise während des Schrittes b) mit einem Einspritzdruck von mehr als oder gleich 1,1 bar, zum Beispiel im Bereich zwischen 1,1 bar und 6 bar eingespritzt wird.

14. Verfahren nach einem der Ansprüche 1 bis 13, **dadurch gekennzeichnet, dass** die Faserstruktur direkt einstückig durch dreidimensionales Weben hergestellt wird.

15. Verfahren zur Herstellung eines Teils aus Verbundwerkstoff, umfassend den folgenden Schritt:
d) Sintern der feuerfesten Teilchen (20), die in dem nach Durchführen eines Verfahrens nach einem der Ansprüche 1 bis 14 erhaltenen Faservorformling vorhanden sind, um eine feuerfeste Matrix in den Poren des Vorformlings zu bilden.

## Claims

1. A method of fabricating a fiber preform filled with refractory ceramic particles (20), the method comprising the following steps:
a) placing a fiber texture (1) comprising refractory ceramic fibers in a mold cavity (2) defined by a mold (3) and a countermold (4; 4');
b) injecting a slip comprising a powder of refractory ceramic particles (20) present in a liquid medium, the slip being injected into the pores of the fiber texture (1) present in the mold cavity (2), injection being performed through at least a first face (1a) or a first edge (1a') of said fiber texture (1), wherein during step b), the slip is injected into the mold cavity through one or more injection ports, and prior to step b), the slip presents a volume content of refractory ceramic particles that is less than or equal to 40%; and
c) draining the liquid medium of the slip that has penetrated into the fiber texture (1) through the porous material part (5) having thickness greater than or equal to 0.1 mm, the draining being performed at least through a second face (1b) or a second edge of the fiber texture (1) different from the first face (1a) or the first edge (1a'), said porous material part (5) also serving to retain the refractory particle powder (20) in the pores of the fiber texture (1) in order to obtain a fiber preform filled with refractory particles (20), the porous material part (5) being present between the mold (3) and the fiber texture (1) or between the countermold (4; 4') and the fiber texture (1), and the porous material part (5) being present between at least one outlet vent (16) and the fiber texture (1), pumping being performed at the outlet vent (16) in order to drain the liquid medium through said outlet vent (16).

2. A method according to claim 1, **characterized in that** the mold (3) constitutes a rigid support on which the fiber texture (1) is present, and the countermold (4) is rigid.

3. A method according to claim 1, **characterized in that** the mold (3) constitutes a rigid support on which the fiber texture (1) is present and the countermold (4') is deformable.

4. A method according to any one of claims 1 to 3, **characterized in that** the countermold (4) exerts pressure on the fiber texture (1) during and/or after step b).

5. A method according to claim 4, **characterized in that** the fiber texture (1) is compacted between the mold (3) and the countermold (4) during and/or after step b).

6. A method according to any one of claims 1 to 5, **characterized in that** during step b), the slip is injected through a plurality of different zones of the outside surface of the fiber texture (1).

7. A method according to claim 6, **characterized in that** a distributor element (30) is present in the mold cavity (2) to distribute the flow of slip, said distributor element (30) defining a plurality of openings (31) through which the slip flows during step b) in order to reach the first face (1a) or the first edge (1a') of the fiber texture (1).

8. A method according to any one of claims 1 to 7, **characterized in that** the slip is injected through a first side of the fiber texture and the liquid medium is drained through a second side of the fiber texture, opposite from the first side.

9. A method according to any one of claims 1 to 8, **characterized in that** during step b), the slip is injected at least through an edge (1a') of the fiber texture, and **in that**, during step c), draining is performed at least through a face (1b) of the fiber texture.

10. A method according to any one of claims 1 to 9, **characterized in that**, during step b), the slip is injected at least through a first face (1a) of the fiber texture, and **in that**, during step c), draining is performed at least through a second face (1b) of the fiber texture, different from the first face (1a).

11. A method according to any one of claims 1 to 10, **characterized in that** the fiber texture (1) comprises refractory oxide fibers, and **in that** the refractory particles are refractory oxide particles.

12. A method according to any one of claims 1 to 11, **characterized in that** a pressure less than or equal to 950 mbar is applied to the outlet vent (16) during step c) .

13. A method according to any one of claims 1 to 12, **characterized in that** the slip is injected under pressure during step b), the slip being for example injected, during step b), at an injection pressure greater than or equal to 1.1 bar, for example comprised between 1.1 bar and 6 bars.

14. A method according to any one of claims 1 to 13, **characterized in that** the fiber texture is made directly as a single piece by three-dimensional weaving.

15. A method of fabricating a composite material part and including the following step:
d) sintering the refractory particles (20) present in the fiber preform obtained by performing a method according to any one of claims 1 to 14 so as to form a refractory matrix in the pores of said preform.
